# EUROPEAN PATENT SPECIFICATION

(11) **EP 3 463 977 B1**
(45) Date of publication and mention of the grant of the patent: **15.04.2020**
(21) Application number: 17728950.1
(22) Date of filing: 26.05.2017
(51) Int. Cl.: B60P 3/10, B60P 1/54

(54) **BOAT TRAILER WITH INSTALLATION FOR LAUNCHING A BOAT INTO THE WATER**
BOOTSANHÄNGER MIT ANLAGE FÜR DAS ZUWASSERLASSEN EINES BOOTS
REMORQUE POUR BATEAU AVEC INSTALLATION POUR LE LANCEMENT D'UN BATEAU DANS L'EAU

(30) Priority: 30.05.2016 NL 2016856
(43) Date of publication of application: 10.04.2019
(73) Proprietor: Leeuwestein, Johannes Teunis, 3316 AD Dordrecht (NL)
(72) Inventor: Leeuwestein, Johannes Teunis, 3316 AD Dordrecht (NL)
(74) Representative: Van Breda, Jacobus
(86) International application number: PCT/NL2017/050335
(87) International publication number: WO 2017/209602

(56) References cited:
- DE-U1- 20 219 568
- FR-A1- 2 395 185
- US-A- 2 776 761
- US-A- 4 889 465
- US-A- 5 490 753

## Description

### Field of the invention

The present invention relates to a boat trailer for transporting over public roads and launching into the water, and placing back from the water onto the boat trailer, of a boat.

### Background of the invention

Boat trailers are known. This almost always concerns trailers falling in the category which is allowed to be pulled by a private car. Such trailers are often equipped with means for launching into the water and fetching out of the water on the boat trailer of a boat to be transported, such as a recreational craft or water scooter. However, these means are exclusively suitable for use in cooperation with a so-called trailer ramp. Trailer ramps are only present at a very limited number of places. Moreover, significant problems are coupled to the launching of a boat from a boat trailer using a trailer ramp.

Firstly, the boat trailer has to be driven sufficiently into the water in order for the boat to start floating or that it can be pushed from the boat trailer with little force. This method is not only harmful to the boat trailer and possibly to the pulling vehicle because these come, to a larger or lesser extent, in contact with the water.

It is further not always straightforward to get the boat freely floating into the water from the boat trailer or, in the reverse process, to get the boat out of the water on the boat trailer in the desired position. This position in particular can play an important role. If the boat is pulled insufficiently far onto the trailer, an undesired ball pressure will quickly build on the trailer coupling, which during transport can lead to dangerous and forbidden conditions.

US 4,889,465 discloses a boat trailer according to the preamble of claim 1.

US 2,776,761 discloses a boat trailer with a frame embodying spaced sidebars, front and rear crossbars connecting the front and rear ends of the sidebars, the tubular member having one of its ends secured to the rear crossbar, an extensible boom slidably mounted in the tubular member extensible to a position beyond the end of the tubular member, a supporting member rising from one end of the boom, said supporting member having a bifurcated upper end in which the bow of the boat rests, holding said boat against lateral movement with respect to the boom, and means for lashing the boat positioned on the trailer to said trailer.

US 5,490,753 discloses a roll on roll off receptacle handling system, that can load and unload a receptacle, storing the receptacle and transporting the receptacle. The system includes a storage platform that the receptacle can be rolled on to and off from. The system also includes a transport device that the receptacle can be rolled on to or off from. The transport device can transport the receptacle to another location where it can be rolled off to another platform. The system also includes an overhead boom, mounted on the transport device, that functions to load and unload the receptacle.

FR 2 395 185 discloses a launching device with a central support beam fitted with central keel rollers and guide rollers. The central beam supports a transverse wheel axle and two wheels. The front of the trolley is fitted with a towing bracket. The rear of the trolley has an outrigger bracket. The trolley has a hinged hoop normally stowed flat along the central beam. The hoop is fitted with a pulley and is able to swing out beyond the rear of the trolley. A boat can be suspended from cables and winched in from a winch.

DE 202 19 568 discloses a trailer with a water tank. The water tank, located at the front of the trailer is filled with water using a submersible pump. The frame of the trailer, carrying the boat, is unlocked, swivelled across the rear of the trailer and lowered into the water by electrically driven, swivel mounted bars. For loading the action is reversed and the water guided back into the lake or river from which the boat is taken on the trailer.

### Summary of the invention

The present invention provides a boat trailer as described in the accompanying claims.

Specific embodiments of the invention are set forth in the dependent claims.

These and other aspects of the invention will be apparent from, and elucidated, with reference to the embodiments described hereinafter.

### Brief description of the drawings

Further details, aspects and embodiments of the invention will be described, by way of example only, with reference to the drawings.

In the drawings, like reference numbers are used to identify like or functionally similar elements. Elements in the figures are illustrated for simplicity and clarity and have not necessarily been drawn to scale.

Because the figures exhibit a lot of similarities, reference numbers are for the sake of clarity generally only depicted in the figure where the element is best visible.
FIGs. 1a-1f show a first example of an embodiment of a boat trailer, generally indicated with 1, in top-view with a boat thereon, in several stages of launching into the water.
FIGs. 2a-2f show the boat trailer of FIG. 1 in side view.
FIGs. 3a-3d show a second example of an embodiment of a boat trailer.

### Detailed description of embodiments

In the following description, details of the shown embodiments of the present invention are described to the extent than considered for the understanding and appreciation of the underlying concepts of the invention.

In the figures, examples are shown of embodiments of a boat trailer 1 for transporting over public roads and launching into the water, and from the water back onto the boat trailer, of a boat 2. The boat trailer comprises a chassis 10 on which the boat 2 can be placed. The boat trailer 1 is provided with a hoisting installation 11 for hoisting the boat 2 when located on the boat trailer 1 and moving this boat 2 in hoisted condition besides , i.e. at the front, rear or longitudinal side of the trailer, the trailer 1 and lowering the boat 2 on or in a desired location, such as a waterway.

The boat trailer 1 is provided with a counterweight equipment 12 which is movably attached to the boat trailer in such a manner that a centre of gravity Z of the counterweight equipment 12 is movable from a first position to a second position. In the first position, the centre of gravity of the counterweight equipment is located closer to the wheels of the boat trailer 1, and hence the tipping point of the boat trailer 1, than in the second position.

The boat trailer thereby renders launching into the water and placing from the water onto the boat trailer easily performable. Moreover, the boat trailer renders launching a boat into the water, and placing from the water onto the boat trailer, possible at locations where a trailer ramp is not available.

With such a boat trailer a boat can for example be hoisted from the boat trailer on a quay and be launched into the water next to the quay. The reverse path can be travelled as well and a boat which lays next to a quay can be hoisted out of the water and be placed onto the boat trailer by the hoisting installation of the boat trailer. Not only does this result in a significant improvement relative to the existing boat trailers with respect to the freedom to choose the launch location, but the launching into the water and from the water placing back onto the boat trailer passes in a much simpler manner.

In doing so, the stability is increased because the boat trailer is provided with a, for example outwards or forwards and backwards, movable counterweight equipment. By moving this counterweight equipment from a first position to a second position, in which in the first position the centre of gravity is located closer to the wheels of the boat trailer than in the second position, the reach of the hoisting installation with a boat as load at the side of the boat trailer opposite to the side beyond which the counterweight equipment has been moved, is increased. The sides can hereby for example be the front side, rear side or longitudinal side of the boat trailer.

According to a further embodiment of the boat trailer, the counterweight equipment may comprise a hollow space and the boat trailer is provided with a pump installation with which water from outside the boat trailer can be pumped into the hollow space of the counterweight equipment. This water can for example be pumped from the waterway in which the boat is being launched or from which the boat is taken out of the water, and then contributes to the ballast weight of the counterweight equipment and increases thereby the stability and thus the maximal sideways position, in front of, behind or alongside the boat trailer of the boat in the hoisting installation. By for example pumping the hollow space empty or providing at the bottom side with a drain with a valve, after use of the hoisting installation the water can be drained again from the counterweight equipment. Thereby, the total weight of the boat trailer is reduced, which benefits to the load capacity. The weight of the water thus does contribute to the stability provided by the counterweight equipment, but does not contribute to the maximum weight of the loaded boat trailer allowed during driving. It is noted hereby that with respect to light and/or small vessels, such as relatively small boats and for example jet skis, an embodiment without water fillable hollow space can suffice, or can be refrained from the acts of filling and draining again after hoisting in case for example the combined weight of the boat trailer, the boat and the filled counterweight lies below the maximum for transport over public roads allowed by law.

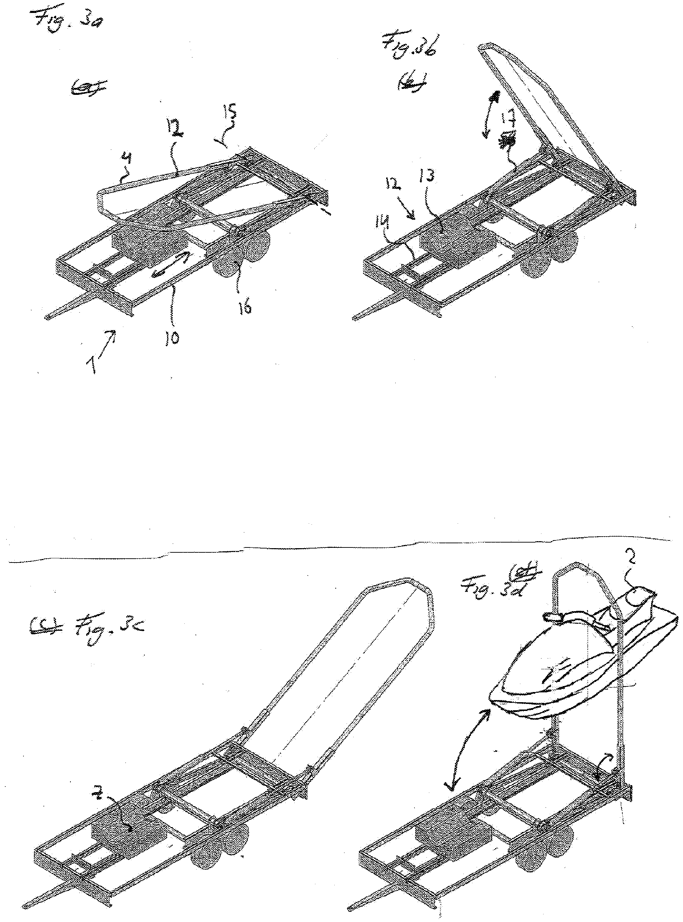

The counterweight installation can, as in the example of FIG. 3, be attached movably in a longitudinal direction, as indicated in FIG. 3 with the arrows. In the second position the centre of gravity of the counterweight equipment may then, seen in the longitudinal direction, be located further from the wheels of the boat trailer 1 than in the first position. Hereby, a displacement of the boat in the longitudinal direction can for example be performed in a stable manner. Additionally, such a displaceable counterweight can be implemented in a mechanically straightforward manner, such as for instance in FIG. 3 by a linearly movable weight 13 which can, for example, be rolled or slid on a rails or guide 14.

When doing so, as shown in FIG. 3, the first position of the centre of gravity of the counterweight can be located closer to the rotation point of the boat trailer 1 than in the second position. Hereby, the boat trailer can have, for example during transport, a good manoeuvrability with the weight in the first position while with the weight in the second position, with the boat at the other side of the wheels than that of the weight, the boat can be placed onto the boat trailer in a stable manner or hoisted therefrom, for example to launch the boat into the water or take the boat out of the water.

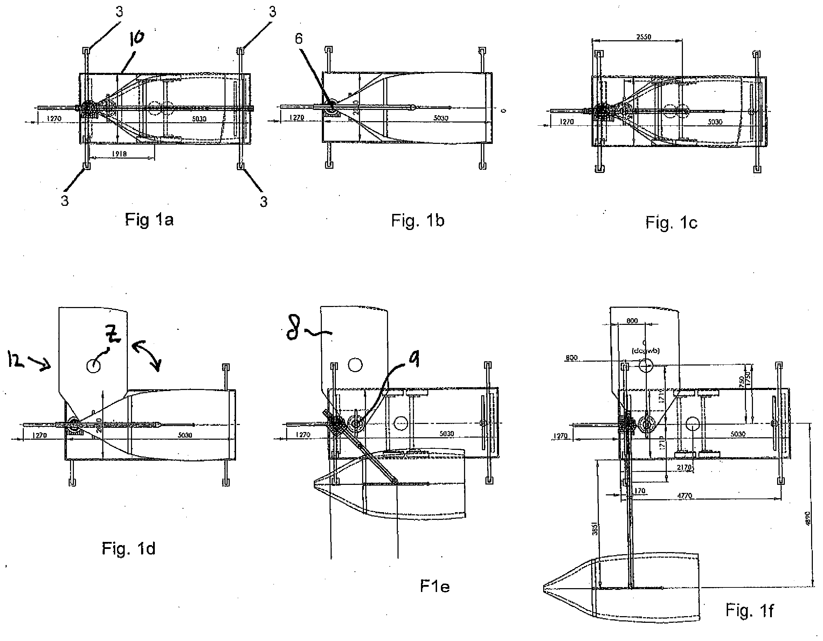

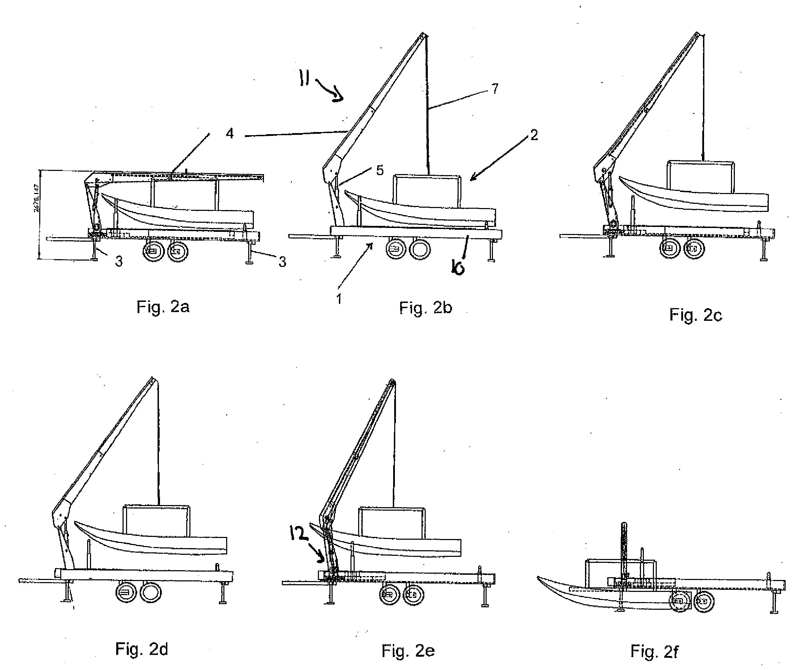

In the second position, the centre of gravity of the counterweight can be located within the boat trailer, as shown in FIG. 3. The footprint of the boat trailer 8 can hereby remain limited during the displacement of the boat. In an alternative manner, as in the example of FIGs. 1a-1d and 2a-2d, the centre of gravity of the counterweight can be moved to a second position outside the boat trailer 1, by means of which a larger moment of force can be obtained and accordingly heavier boats be displaced and/or boats at a large distance from the boat trailer.

As shown, the centre of gravity of the counterweight can be moved from the first position to the second position in order to compensate at least partially for the movement of the centre of gravity of the boat trailer and boat due to the displacement of the boat. In the shown examples the boat trailer is provided at each longitudinal side with multiple wheels 16 lined up side-by-side and each attached to a corresponding wheel at the other longitudinal side by means of a wheel axle. The wheel axles are located, seen in the longitudinal direction, at a distance from the front and rear and the boat trailer thus has a virtual pivot axis which extends parallel to and between the wheel axles. In FIG. 3 the boat, in this example a jet ski (see FIG. 3d) with typically a weight between 100 kg and 400 kg, is displaced in the longitudinal direction and the weight 13 displaced in the opposite direction (either prior to displacing the boat 2 or simultaneously and coupled to the movement of the hoisting installation 11).

In a further embodiment of the boat trailer, the counterweight equipment is provided with an, in height adjustable, stabilisation leg. By letting this leg rest on the ground in an outwardly moved position of the counterweight equipment, the construction of the counterweight equipment can be simplified.

A constructively simple embodiment of the hoisting installation of the boat trailer is provided with a hoist arm which is rotatable around a vertical axis. Hereby a load is movable from above the boat trailer to beside and vice versa in a straightforward manner.

When the counterweight equipment is attached to the boat trailer in a manner rotatable around a vertical axis, a constructively simple solution for the movability of the counterweight equipment becomes achievable as well.

In an embodiment for a simultaneous movement in opposition direction of the rotational movements of respectively the hoist arm and counterweight equipment these movements are coupled, for example by mechanical coupling of the rotation axles by means of interlocking toothed wheels.

In an embodiment, the boat trailer is provided with a power supply system. Thereby the hoisting installation and the movement of the counterweight equipment, as well as the pump installation, can be powered.

In a further embodiment, the power supply system comprises at least a battery and a hydraulic pump. With a battery the power supply system of the boat trailer becomes autonomous and still simply rechargeable and with a, electrically powered, hydraulic pump a range of hoisting installations is useable on a boat trailer.

In an embodiment in which the boat trailer is dimensioned such that this, including boat loaded thereon, is not heavier than about 1500 kg, this can be pulled by numerous private cars and is thereby interesting for a large number of boat owners.

The boat trailer can for example be dimensioned such that the boat trailer is suitable to lift and move a boat to a maximum sideways distance of 5m. Hereby the boat can be launched into the water at numerous quays and there will be still sufficient space for the slope of an embankment between a waterway and the road next to it.

In FIGs. 1a and 2a the boat trailer 1 is parked next to a waterway with a quay or short slope. At both sides of the boat trailer 1 two support legs 3 are pulled out and lowered to the road. The support- or stabilisation legs provide further stability to hoist in a stable manner a load from the vehicle to outside the support on the road by the wheels. The support legs can for example be sideward extendable and adjustable in height. The boat trailer 1 is provided with a hoisting installation with an arm 4, which is in FIGs. 1a, 2a in lowered position in which the boat trailer 1 can be transported over the public road. Hoist arm 4 can hinge around a horizontal axis over above 90° by means of hydraulic cylinder 5 and hinge over about 180° around vertical axis 6.

In FIGs. 1b and 2b the hoist arm is lifted by the hydraulic cylinder 5 to a slant upward position and a hoist cable 7 is attached to boat 2. The hoist cable 7 is operated by a not depicted winch, which like the hoist arm 4, hydraulic cylinder 5 and hoist cable 6 is part of the hoisting installation of boat trailer 1. The hoisting installation, and therewith the hoist arm 4 and hoist cable 7, can be driven in rotation around vertical axis 6. Boat trailer 1 is provided with two 12V batteries, which together serve a 24V hydraulic pump which in turn drives the movements of the hoisting installation. Boat trailer 1 is further provided with a battery charger of 230V-24V and with a 12V-24V voltage step-up converter in order that besides via the power grid the batteries can also be charged via a car pulling the boat trailer 1.

In FIGs. 1c and 2c the boat is lifted by operation of the hoist cable 7 by means of the winch and is hanging above the boat trailer 1.

In FIGs. 1d and 2d a tank 8, which constitutes the hollow space of the counterweight equipment of boat trailer 1, is swivelled to the starboard side of boat 2, around vertical pivot axis 9 to outside the wheels of the boat trailer 1. In this position the tank 8 is supported by one or more support legs (not shown in the figures). Tank 8 can now be filled with water from the waterway next to the boat trailer 1 aided by a pump which is not shown in the figures and associated filling hoses.

Once the tank is filled, the boat can be turned to outside the boat trailer by rotation of the hoisting installation around vertical axis 6 towards port side, see FIGs. 1e and 2e. Subsequently boat 2 is lowered by lowering hoist arm 4 by the hydraulic cylinder 5, where boat 2 at the same time comes to hang further away from boat trailer 1 above the waterway not shown in the drawing, see FIGs. If and 2f. Thereafter boat 2 can be launched into the water by lowering hoist cable 7 by means of the winch.

The tank can now be emptied into the waterway via a hose and the boat trailer be brought back to the position as depicted in FIGs. 1a and 2a, particularly the bringing back in of the tank 8 and returning the hoist arm into transport position, and except that the boat 2 is no longer on the boat trailer 1.

To fetch the boat 2 out of the water and to place on the boat trailer 1 the operations described above will be followed in substantially reverse order.

An example of typical dimensions of a boat trailer 1 as described above is:
- length of the support platform of boat trailer 1: 5 m;
- length hoist arm 4: 5 m;
- hoisting height: about 6 m;
- lifting power hoisting installation: 800 kg;
- volume tank: about 1200 l.

Further equipment of the boat trailer typically comprises:
- protection for the hoist thread above and three turns from the end;
- protection to swivelling of water tank 8 and hoist arm 4 at 90° to both sides;
- 2 carbon ladders which can be coupled to arrive from the quay into the boat 2 and vice versa;
- custom made support points for boat 2;
- electrical turnoff of filling of the tank once this is full;
- sleeves for storing hoses.

In the example of FIGs.3a-d the hoisting installation is suitable to hoist the boat 2, when located on the boat trailer 1, and move in hoisted condition to the front side or rear side of the boat trailer 1 and beyond the respective side of the boat trailer. The boat 2 can subsequently be lowered on or in a desired place, such as a waterway. The distance between the boat and boat trailer does hereby not exceed a predetermined maximum distance. The hoisting installation 11 shown here can further, when it is situated in front of or beyond the boat trailer 1, within the maximum distance, hoist and move the boat 2 until above the boat trailer and subsequently lower the boat 2 on the boat trailer 1.

As is shown in FIGs. 3a-3d, here the hoisting installation 11 is provided with a hoisting arm 4 which is rotatable around a horizontal axis 15. The horizontal axis 15 is located, in the longitudinal direction of the boat trailer, at a distance from the wheels 16 and in this example between the wheels 16 and the rear of the boat trailer, more specifically, seen in the longitudinal direction closer to the rear than to the wheels.

As shown in FIGs. 3a-3c, is the hoist arm 4 rotatable from a folded down position extending in a first more or less horizontal (i.e. at least partially parallel to the longitudinal direction of the boat trailer) direction (FIG. 3a) into a reversely folded position (FIG. 3c) extending in a second horizontal direction opposite to the first horizontal direction, in this example via an upright position (FIG. 3b). In the reversely folded position the hoist arm 4 extends from the boat trailer 1, and in the example of FIG. 3c the hoist arm extends from the rear of the boat trailer. By means of the hoisting installation 11 a boat can thus be displaced to the rear of the boat trailer 1 or from there be put on the boat trailer 1.

The hoist arm 3 shown in FIGs. 3a-3d has at least one end pivotably attached around the horizontal axis 15 to a side of the boat trailer and provided with a, for comprehensibility not shown, suspension for the boat which is attached to the arm at distance from the end. In the shown example, the hoisting installation 11 is provided with gas-springs 17 attached with one end to the hoist arm at a point at a distance from the horizontal axis 15 and their other end to the chassis 10 at distanced from the horizontal axis 15. The folding of the hoist arm is hereby facilitated.

As shown in FIG. 3d the boat 2 is displaced alongside the arm 4 to the front- or backside of the boat trailer upon horizontal rotation of the hoist arm. In this example, the hoist arm 4 constitutes an arch shaped passage or gate with at each longitudinal side of the boat trailer a hingably attached end, in this example at the corner points of the chassis 10. Upon rotation of the hoist arm 4, the boat 2 is displaced through the arch-shaped passage to outside the boat trailer, in this example to the rear side thereof, or vice versa. This enables a controlled displacement of the boat 2 where an undesired rotation of the boat 2 around a vertical axis can be limited.

In the foregoing specification, the invention has been described with reference to specific examples of embodiments of the invention. It will, however, be evident that various modifications and changes may be made therein without departing from the scope of the invention as set forth in the appended claims.

For example the boat can be a recreational craft, such as a dinghy or motorboat, a sailing or motor yacht, or water scooter, such as a jet ski, in the sense of the Dutch recreational craft act.

Also, the boat trailer can be implemented as a trailer in the sense of the Dutch road traffic act and the vehicle pulling the boat trailer a private vehicle in the sense of the road traffic act. It will be apparent that in the examples the boat trailer 1 can be attached to a motorised vehicle and in the FIGs. thereto is provided with a drawbar, which is not described in further detail.

Furthermore, in the example of FIGs. 1 and 2 both longitudinal sides of the boat trailer are each provided with two support legs, but it will be apparent that more or less support legs may be present.

In addition are in examples of boat trailers provided with two wheel axles, but the boat trailer can have more than two wheel axles or only one wheel axle.

However, other modifications, variations and alternatives are also possible. The specifications and drawings are, accordingly, to be regarded in an illustrative rather than in a restrictive sense and the claims not limited to the shown examples.

### List of reference numbers:

- 1.: boat trailer
- 2.: boat
- 3.: support leg
- 4.: hoist arm
- 5.: hydraulic cylinder
- 6.: vertical pivot axis of hoist arm
- 7.: hoist cable
- 8.: tank, hollow space
- 9.: vertical pivot axis of counterweight equipment
- 10.: chassis
- 11.: hoisting installation
- 12.: counterweight equipment
- 13.: weight
- 14.: rails
- 15.: horizontal pivot axis of arch shaped hoist arm
- 16.: wheels
- 17.: gas spring.

## Claims

1. Boat trailer (1) for transporting over the public road and launching into the water, and placing back on the boat trailer (1) from the water, of a boat (2), the boat trailer (1) comprising:
a chassis (10) on which the boat (2) can be placed;
a hoisting installation (11) for hoisting the boat (2) when located on the boat trailer (1) and moving the boat (2) in hoisted condition to beside the boat trailer (1) and subsequently lowering on or in a desired location, such as a waterway,
a counterweight equipment (12) which is movably attached to the boat trailer (1) in such a way that a centre of gravity of the counterweight equipment (12) is movable from a first position to a second position, wherein in the first position the centre of gravity of the counterweight equipment (12) is located closer to the wheels (16) of the boat trailer (1) than in the second position, **characterized in that** the counterweight equipment (12) comprises a hollow space (8) and the boat trailer (1) is provided with a pump installation suitable to pump water from outside the boat trailer (1) into the hollow space (8) of the counterweight equipment (12).

2. Boat trailer according to claim 1 or 2, wherein the counterweight equipment (12) is attached displaceable in a longitudinal direction of the boat trailer (1) and in the second position the centre of gravity of the counterweight equipment (12) is located, seen in the longitudinal direction, further away from the wheels (16) of the boat trailer (1) than in the first position.

3. Boat trailer according to one or more of the preceding claims, wherein in the first position the centre of gravity of the counterweight (12) is situated between the wheels (16) of the boat trailer (1) and in the second position outside the wheels (16) of the boat trailer (1).

4. Boat trailer according to one or more of the preceding claims, wherein in the second position the centre of gravity of the counterweight (12) is situated inside the boat trailer (1) .

5. Boat trailer according to one or more of the preceding claims, wherein:
the hoisting installation (11) is suitable to hoist the boat (2), when located on the boat trailer (1), and move the boat (2) in hoisted condition to beside the boat trailer (1) at a sideways distance from the boat trailer (1) and subsequently lower the boat (2) at or in a desired location, such as a waterway, wherein this sideways distance does not exceed a predetermined distance, as well as hoisting the boat (2), when located beside the boat trailer (1) at said distance from the boat trailer (1), and in hoisted condition move to above the boat trailer (1) and subsequently lower the boat (2) onto the boat trailer (1).

6. Boat trailer according to one or more of the preceding claims, wherein:
the hoisting installation (11) is suitable to hoist the boat (2), when located on the boat trailer (1), and move the boat (2) in hoisted condition to the front or rear side of the boat trailer (1) and beyond the boat trailer (1) and subsequently lower the boat (2) at or in a desired location, such as a waterway, wherein the distance between boat (2) and boat trailer (1) does not exceed a predetermined maximum distance, as well as hoisting the boat (2), when located within the maximum distance and in hoisted condition move to above the boat trailer (1) and subsequently lower the boat (2) onto the boat trailer (1).

7. Boat trailer according to one or more of the preceding claims, wherein the counterweight equipment (12) is provided with an in height adjustable support leg (3).

8. Boat trailer according to one or more of the preceding claims, wherein the hoisting installation (11) is provided with a hoist arm (4) which is rotatable around a vertical axis.

9. Boat trailer according to one or more of the preceding claims, wherein the counterweight equipment (12) is rotatable around a vertical axis attached to the boat trailer (1).

10. Boat trailer according to claims 8 and 9, wherein for simultaneous movement in opposite direction of the rotational movements of respectively the hoist arm (4) and the counterweight equipment (12) these movements are coupled to each other.

11. Boat trailer according to one or more of the preceding claims, wherein the hoisting installation (11) is provided with a hoist arm (4) which is rotatable around a horizontal axis.

12. Boat trailer according to claim 11, wherein the horizontal axis is situated, in the longitudinal direction of the boat trailer (1), at a distance from the wheels (160 of the boat trailer (1).

13. Boat trailer according to claim 11 or 12, wherein the hoist arm (4)is rotatable from a folded down position extending in a first horizontal direction to a reversely folded position extending in a second horizontal direction, opposite to the first horizontal direction.

14. Boat trailer according to claim 13, wherein in the reverse folded position the hoist arm (4) extends away from the boat trailer (1).

## Patentansprüche

1. Bootsanhänger (1) für den Transport eines Bootes (2) über die öffentliche Straße und das Aussetzen ins Wasser und das Wiederaufsetzen auf den Bootsanhänger (1) aus dem Wasser, wobei der Bootsanhänger (1) Folgendes aufweist:
ein Gestell (10), auf das das Boot (2) platziert werden kann;
eine Hebeanlage (11) zum Anheben des Bootes (2), wenn es sich auf dem Bootsanhänger (1) befindet, und zum Bewegen des Bootes (2) in angehobenem Zustand zur Seite des Bootsanhängers (1) und zum anschließenden Absenken auf oder an einer gewünschten Stelle, wie beispielsweise einem Wasserweg,
eine Gegengewichtseinrichtung (12), die beweglich an dem Bootsanhänger (1) derart angebracht ist, dass ein Schwerpunkt der Gegengewichtseinrichtung (12) aus einer ersten Position in eine zweite Position bewegbar ist, wobei in der ersten Position der Schwerpunkt der Gegengewichtseinrichtung (12) näher an den Rädern (16) des Bootsanhängers (1) liegt als in der zweiten Position, **dadurch gekennzeichnet, dass** die Gegengewichtseinrichtung (12) einen Hohlraum (8) umfasst und der Bootsanhänger (1) mit einer Pumpenanlage versehen ist, die geeignet ist, Wasser von außerhalb des Bootsanhängers (1) in den Hohlraum (8) der Gegengewichtseinrichtung (12) zu pumpen.

2. Bootsanhänger gemäß Anspruch oder 2, wobei die Gegengewichtseinrichtung (12) in Längsrichtung des Bootsanhängers (1) verschiebbar angebracht ist und in der zweiten Position der Schwerpunkt der Gegengewichtseinrichtung (12), in Längsrichtung gesehen, weiter von den Rädern (16) des Bootsanhängers (1) entfernt ist als in der ersten Position.

3. Bootsanhänger gemäß einem oder mehreren der vorstehenden Ansprüche, wobei in der ersten Position der Schwerpunkt des Gegengewichts (12) zwischen den Rädern (16) des Bootsanhängers (1) und in der zweiten Position außerhalb der Räder (16) des Bootsanhängers (1) liegt.

4. Bootsanhänger gemäß einem oder mehreren der vorstehenden Ansprüche, wobei in der zweiten Position der Schwerpunkt des Gegengewichts (12) innerhalb des Bootsanhängers (1) liegt.

5. Bootsanhänger gemäß einem oder mehreren der vorstehenden Ansprüche, wobei:
die Hebeanlage (11) geeignet ist, das Boot (2) anzuheben, wenn es sich auf dem Bootsanhänger (1) befindet, und das Boot (2) in angehobenem Zustand neben den Bootsanhänger (1) in einem seitlichen Abstand von dem Bootsanhänger (1) zu bewegen und anschließend das Boot (2) an oder in einer gewünschten Stelle, wie beispielsweise einem Wasserweg, abzusenken, wobei dieser seitliche Abstand einen vorbestimmte Abstand nicht überschreitet, sowie zum Anheben des Bootes (2), wenn es sich neben dem Bootsanhänger (1) in dem genannten Abstand von dem Bootsanhänger (1) befindet, und es im angehobenen Zustand über den Bootsanhänger (1) zu bewegen und anschließend das Boot (2) auf den Bootsanhänger (1) abzusenken.

6. Bootsanhänger gemäß einem oder mehreren der vorstehenden Ansprüche, wobei:
die Hebeanlage (11) geeignet ist, das Boot (2) anzuheben, wenn es sich auf dem Bootsanhänger (1) befindet, und das Boot (2) in angehobenem Zustand zur Vorder- oder Rückseite des Bootsanhängers (1) und über den Bootsanhänger (1) hinaus zu bewegen und anschließend das Boot (2) an oder in einer gewünschten Stelle, wie beispielsweise einem Wasserweg, abzusenken, wobei der Abstand zwischen dem Boot (2) und dem Bootsanhänger (1) einen vorbestimmten maximalen Abstand nicht überschreitet, sowie zum Anheben des Bootes (2), wenn es sich innerhalb des maximalen Abstandes befindet, und es im angehobenen Zustand über den Bootsanhänger (1) zu bewegen und anschließend das Boot (2) auf den Bootsanhänger (1) abzusenken.

7. Bootsanhänger gemäß einem oder mehreren der vorstehenden Ansprüche, wobei die Gegengewichtseinrichtung (12) mit einem in der Höhe verstellbaren Stützbein (3) versehen ist.

8. Bootsanhänger gemäß einem oder mehreren der vorstehenden Ansprüche, wobei die Hebeanlage (11) mit einem Hebearm (4) versehen ist, der um eine vertikale Achse drehbar ist.

9. Bootsanhänger gemäß einem oder mehreren der vorstehenden Ansprüche, wobei die Gegengewichtseinrichtung (12) um eine vertikale Achse drehbar ist, die an dem Bootsanhänger (1) befestigt ist.

10. Bootsanhänger nach den Ansprüchen 8 und 9, wobei zur gleichzeitigen Bewegung in entgegengesetzter Richtung der Drehbewegungen des Hebearms (4) bzw. der Gegengewichtseinrichtung (12) diese Bewegungen miteinander gekoppelt sind.

11. Bootsanhänger nach einem oder mehreren der vorstehenden Ansprüche, wobei die Hebeanlage (11) mit einem Hebearm (4) versehen ist, der um eine horizontale Achse drehbar ist.

12. Bootsanhänger nach Anspruch 11, wobei die horizontale Achse in Längsrichtung des Bootsanhängers (1) in einem Abstand von den Rädern (160 des Bootsanhängers (1) angeordnet ist.

13. Bootsanhänger nach Anspruch 11 oder 12, wobei der Hebearm (4) aus einer heruntergeklappten Position, die sich in einer ersten horizontalen Richtung erstreckt, in eine umgekehrt geklappte Position drehbar ist, die sich in einer zweiten horizontalen Richtung erstreckt, die der ersten horizontalen Richtung entgegengesetzt ist.

14. Bootsanhänger nach Anspruch 13, wobei sich der Hebearm (4) in der umgekehrt geklappten Position von dem Bootsanhänger (1) weg erstreckt.

## Revendications

1. Remorque pour bateau (1) pour le transport sur la voie publique et la mise à l'eau, et la remise sur la remorque pour bateau (1) depuis l'eau, d'un bateau (2), la remorque pour bateau (1) comprenant :
un châssis (10) sur lequel le bateau (2) peut être placé ;
une installation de levage (11) pour lever le bateau (2) lorsqu'il est situé sur la remorque pour bateau (1) et pour déplacer le bateau (2) dans un état levé à côté de la remorque pour bateau (1) et pour l'abaisser ensuite sur ou dans un emplacement souhaité, tel qu'une voie navigable,
un équipement de contrepoids (12) qui est fixé de manière mobile à la remorque pour bateau (1) de sorte qu'un centre de gravité de l'équipement de contrepoids (12) soit mobile d'une première position à une deuxième position, où, dans la première position, le centre de gravité de l'équipement de contrepoids (12) est situé plus près des roues (16) de la remorque pour bateau (1) que dans la deuxième position, **caractérisé en ce que** l'équipement de contrepoids (12) comprend un espace creux (8) et la remorque pour bateau (1) est pourvue d'une installation de pompage apte à pomper l'eau depuis l'extérieur de la remorque pour bateau (1) dans l'espace creux (8) de l'équipement de contrepoids (12).

2. Remorque pour bateau selon la revendication 1, dans laquelle l'équipement de contrepoids (12) est fixé de manière à pouvoir se déplacer dans une direction longitudinale de la remorque pour bateau (1) et, dans la deuxième position, le centre de gravité de l'équipement de contrepoids (12) est situé, vu dans la direction longitudinale, plus loin des roues (16) de la remorque pour bateau (1) que dans la première position.

3. Remorque pour bateau selon une ou plusieurs des revendications précédentes, dans laquelle, dans la première position, le centre de gravité du contrepoids (12) est situé entre les roues (16) de la remorque pour bateau (1) et, dans la deuxième position, à l'extérieur des roues (16) de la remorque pour bateau (1).

4. Remorque pour bateau selon une ou plusieurs des revendications précédentes, dans laquelle, dans la deuxième position, le centre de gravité du contrepoids (12) est situé à l'intérieur de la remorque pour bateau (1).

5. Remorque pour bateau selon une ou plusieurs des revendications précédentes, dans laquelle :
l'installation de levage (11) est apte à lever le bateau (2), lorsqu'il est situé sur la remorque pour bateau (1), et à déplacer le bateau (2) dans un état levé à côté de la remorque pour bateau (1) à une distance latérale de la remorque pour bateau (1) et à abaisser ensuite le bateau (2) à ou dans un emplacement souhaité, tel qu'une voie navigable, où cette distance latérale ne dépasse pas une distance prédéterminée, ainsi qu'à lever le bateau (2), lorsqu'il est situé à côté de la remorque pour bateau (1) à ladite distance de la remorque pour bateau (1), et, dans un état levé, à le déplacer jusqu'à un emplacement situé au-dessus de la remorque pour bateau (1) et à abaisser ensuite le bateau (2) sur la remorque pour bateau (1).

6. Remorque pour bateau selon une ou plusieurs des revendications précédentes, dans laquelle :
l'installation de levage (11) est apte à lever le bateau (2), lorsqu'il est situé sur la remorque pour bateau (1), et à déplacer le bateau (2) dans un état levé vers le côté avant ou arrière de la remorque pour bateau (1) et au-delà de la remorque pour bateau (1) et à abaisser ensuite le bateau (2) à ou dans un emplacement souhaité, tel qu'une voie navigable, où la distance entre le bateau (2) et la remorque pour bateau (1) ne dépasse pas une distance maximale prédéterminée, ainsi qu'à lever le bateau (2), lorsqu'il est situé dans la distance maximale et, dans un état levé, à le déplacer au-dessus de la remorque pour bateau (1) et à abaisser ensuite le bateau (2) sur la remorque pour bateau (1).

7. Remorque pour bateau selon une ou plusieurs des revendications précédentes, dans laquelle l'équipement de contrepoids (12) est pourvu d'un pied de support réglable en hauteur (3).

8. Remorque pour bateau selon une ou plusieurs des revendications précédentes, dans laquelle l'installation de levage (11) est pourvue d'un bras de levage (4) qui peut tourner autour d'un axe vertical.

9. Remorque pour bateau selon une ou plusieurs des revendications précédentes, dans laquelle l'équipement de contrepoids (12) peut tourner autour d'un axe vertical fixé à la remorque pour bateau (1).

10. Remorque pour bateau selon les revendications 8 et 9, dans laquelle, pour un mouvement simultané en sens inverse des mouvements de rotation du bras de levage (4) et de l'équipement de contrepoids (12) respectivement, ces mouvements sont couplés entre eux.

11. Remorque pour bateau selon une ou plusieurs des revendications précédentes, dans laquelle l'installation de levage (11) est pourvue d'un bras de levage (4) qui peut tourner autour d'un axe horizontal.

12. Remorque pour bateau selon la revendication 11, dans laquelle l'axe horizontal est situé, dans la direction longitudinale de la remorque pour bateau (1), à une certaine distance des roues (160) de la remorque pour bateau (1).

13. Remorque pour bateau selon la revendication 11 ou 12, dans laquelle le bras de levage (4) peut tourner d'une position dépliée s'étendant dans une première direction horizontale à une position repliée s'étendant dans une deuxième direction horizontale, opposée à la première direction horizontale.

14. Remorque pour bateau selon la revendication 13, dans laquelle, dans la position repliée, le bras de levage (4) s'étend loin de la remorque pour bateau (1).
